# EUROPEAN PATENT SPECIFICATION

(11) **EP 0 443 714 B1**
(45) Date of publication and mention of the grant of the patent: **15.03.1995**
(21) Application number: 91300347.1
(22) Date of filing: 17.01.1991
(51) Int. Cl.: G01H 1/00

(54) **A method and apparatus for processing electrical signals and a stress wave sensor**
Verfahren und Gerät zur elektrischen Signalverarbeitung und Spannungswellenfühler
Procédé et dispositif de traitement des signaux électriques et détecteur d'onde de contrainte

(30) Priority: 21.02.1990 GB 9003878
(43) Date of publication of application: 28.08.1991
(73) Proprietor: ROLLS-ROYCE DSV LIMITED, Derby DE2 8BJ (GB)
(72) Inventor: Holroyd, Trevor James, Mickleover, Derby (GB); King, Simon Daniel, Wilmorton, Derby (GB); Tracey, Timothy Edward, Milford, Derbyshire (GB); Randall, Neil, Bonsall, Derbyshire (GB)
(74) Representative: Gunn, Michael Alan

(56) References cited:
- EP-A- 0 366 286
- US-A- 3 588 695
- US-A- 4 942 387
- PATENT ABSTRACTS OF JAPAN vol. 7, no. 10 (P-168)(1155) 14 January 1983 & JP-57 168 121

## Description

The present invention relates to a method and apparatus for processing electrical signals in order to recognise signal features indicative of variations in a process producing the electrical signals, and is particularly of interest for acoustic emissions or stress waves detected by transducers.

Acoustic emission or stress wave activity is associated with operating machinery or processes, and is produced as a result of friction, impacts, turbulence, cavitation, metal removal, crack growth or plastic deformation taking place during the operation of the machinery or process.

Acoustic emission techniques have been used to monitor the condition of machinery or processes, to assist in the detection and diagnosis of fault conditions some-times at an early stage. The early detection of faults enables planned maintenance and replacement of degrading machinery or processes with a minimum of disruption and cost.

In prior art methods of processing acoustic emissions a transducer detects the acoustic emissions and produces an output signal, and the transducer output signal is processed to produce an electrical signal which corresponds to the acoustic emission activity. In a first prior art method the level of the electrical signal is measured, for example the mean level (RMS level). In this prior art method a fault is detected when there is a marked increase in the mean level of the electrical signal.

A good component operating under normal conditions gives a relatively low electrical signal level, corresponding to a relatively low acoustic emission activity whereas a bad component under normal conditions gives a relatively high electrical signal level, corresponding to a relatively high acoustic emission activity. A good component operating under adverse conditions also gives a relatively high electrical signal level. This method is therefore only suitable for use at a fixed operational condition or some method of normalising the electrical signal level measurement with respect to the operating conditions is required. Furthermore this type of measurement is sensitive to the detection sensitivity of the transducer during the measurement.

In a second method the ratio of the peak level of the electrical signal to the means level (RMS level) of the electrical signal is measured. The ratio of the peak level of the electrical signal to the mean of the electrical signal provides a measure of variations in the nature or form of the source processes producing the acoustic emissions enabling the occurrence of distress to be detected due to the increased occurrence of transient signal excursions. This method has the advantage of being self normalising since to a first approximation it is independent of the operating condition providing it remains at a similar level of distress and variations in signal detection sensitivity. A disadvantage of this method is the susceptibility of the measurement to spurious electrical noise signals such as those caused by electromagnetic switching transients, which can give rise to relatively high ratios of peak level of electrical signal to mean level of electrical signal.

In a third method, described in our copending European patent application 89310138.6 which claims priority from British patent application 8824793.7, the ratio of the mean level of the electrical signal to the minimum level of the electrical signal is measured. The electrical signal is produced by enveloping the transducer output signal. This method has the advantage of being self compensating for variations in the overall level of the electrical signal caused by variations in the operating conditions providing it remains at a similar level of distress or changes in transducer sensitivity. This method also has the advantage of not being significantly affected by electromagnetic switching transients as the mean level is only affected marginally and the minimum level is not affected. A disadvantage of this method is that the processor used to measure the mean level of the electrical signal has a high sampling rate to enable fast digitisation of the electrical signal level and consequently the processor is relatively expensive.

A further piece of prior art US3588695 discloses removing the direct current component from an output signal of a sensing head detecting vibrations of a shaft. The alternating current component of the output signal is measured.

The present invention seeks to provide a method and apparatus for processing electrical signals in order to recognise signal features indicative of variations in the process producing them which overcomes the problems associated with the prior art methods and apparatus.

Accordingly the present invention provides a method of processing an output signal from a transducer (12), the output signal from the transducer (12) corresponding to the acoustic emission activity generated by a process, comprising enveloping (16) the transducer (12) output signal to produce an electrical signal, characterised by removing (20) a direct current component from the electrical signal, measuring (22) an alternating current component of the electrical signal for variations which are indicative of variations in the process producing the acoustic emissions.

Measuring and monitoring the alternating current component of the electrical signal enables earlier detection of faults in the process.

Preferably the mean value of the alternating current component of the electrical signal is measured.

Preferably measuring a mean value of the electrical signal, determining a ratio between the measure of the alternating current component of the electrical signal and the mean value of the electrical signal raised to a power, and monitoring the power of said ratio for variations which are indicative of variations in the process producing the acoustic emissions.

This method is self compensating for variations in the overall level of the electrical signal level caused by variation in the operating conditions.

The ratio may be the mean value of the alternating current component of the electrical signal divided by the mean value of the electrical signal or the mean value of the electrical signal divided by the mean value of the alternating current component of the electrical signal.

The electrical signal may correspond to the level of the acoustic emission activity.

The electrical signal may correspond to the intensity of the acoustic emission activity.

The electrical signal may correspond to a power of the level of the acoustic emission activity.

The electrical signal may correspond to the square of the level of the acoustic emission activity.

The present invention also provides an apparatus for processing acoustic emissions in order to recognise features indicative of variations in a process producing the acoustic emissions comprising at least one transducer (12) acoustically coupled to the process producing acoustic emissions, the at least one transducer (12) being arranged to detect the acoustic emissions and to produce an output signal dependent upon the acoustic emission activity, means (16) to envelope the transducer output signal to produce an electrical signal characterised by means (20) to remove a direct current component from the electrical signal and means (22) to measure an alternating current component of the electrical signal variations of which are indicative of variations in the process producing the acoustic emissions.

Preferably the means to measure the alternating current component of the electrical signal measures the mean value of the alternating current component of the electrical signal.

Means may measure a mean value of the electrical signal, means to determine a power of the ratio between the measure of the alternating current component of the electrical signal and the mean value of the electrical signal, and means to monitor the power of said ratio for variations which are indicative of variations in the process producing the varying electrical signal.

A divider means may determine the ratio of the mean value of the alternating current component of the electrical signal divided by the mean value of the electrical signal.

A first logarithmic amplifier means may produce the log of the mean value of the electrical signal, a second logarithmic amplifier means produces the log of the mean value of the alternating current component of the electrical signal subtracter means subtracts the log of the mean value of the electrical signal from the log of the mean value of the alternating current component of the electrical signal to determine the log of the ratio of the mean value of the alternating current component of the electrical signal to the mean value of the electrical signal.

The electrical signal may correspond to the level of the acoustic emission activity.

The electrical signal may correspond to the intensity of the acoustic emission activity.

The electrical signal may correspond to a power of the level of the acoustic emission activity.

The electrical signal may correspond to the square of the level of the acoustic emission activity.

The means to determine the ratio may be arranged to operate an alarm when the ratio is equal to, greater than or less than a predetermined value.

The means to measure the mean value of the alternating current component of the electrical signal may comprise an alternating current coupled enveloper with a relatively long time constant, and a rectifier.

The means to measure the mean value of the electrical signal may comprise an enveloper with a relatively long time constant.

The envelopers may have a 1 second time constant.

A rectifier may rectify the transducer output signal before it is supplied to the enveloper, and the enveloper has a relatively short time constant.

The enveloper may have a 100 microsecond time constant.

The process may be an industrial process or machine.

The means to determine the ratio may be arranged to send a feedback signal to control the machine or industrial process.

The present invention will be more fully described by way of example with reference to the accompanying drawings, in which:-
Figure 1 is an apparatus for processing acoustic emissions according to the present invention.
Figure 2 is a second embodiment of an apparatus for processing acoustic emissions according to the present invention.
Figure 3 is a graph of the acoustic emission level relative to the value at 20^{o} against temperature.
Figure 4 is a graph of the ratio between the mean of the alternating current component of the electrical signal level and the mean signal level against operating condition.
Figure 5 is a graph of the ratio between the mean of the alternating current component of the electrical signal level and the mean of the electrical signal level against time.
Figure 6 is a third embodiment of an apparatus for processing acoustic emissions according to the present invention.
Figure 7 is a graph comparing the electrical signal level, the mean of the alternating current component of the electrical signal level and the ratio between the mean of the alternating current component of the electrical signal level and the mean of the electrical signal level.
Figure 8 is a graph of the mean of the alternating current component of the electrical signal level with time.
Figure 9 is a graph of the electrical signal level against time.

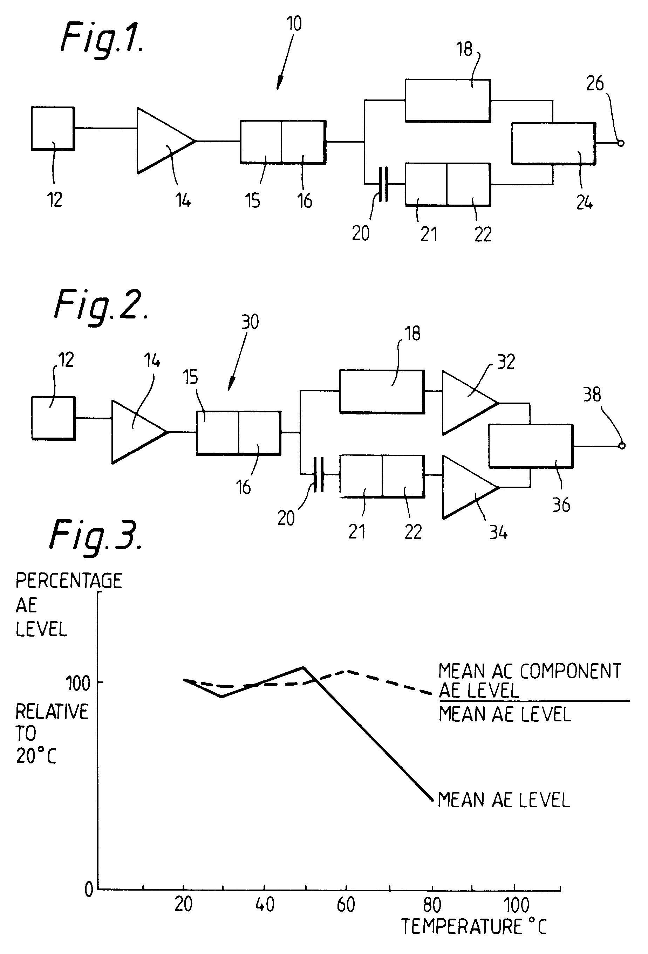

An apparatus 10 for processing acoustic emissions to recognise features indicative of variations in the process producing the acoustic emissions is shown in Figure 1. The apparatus 10 comprises a transducer 12 which is acoustically coupled to a source process of acoustic emissions. The transducer 12 is coupled to a machine, an industrial process or other structure in which acoustic emissions, stress waves or vibrations are generated as a result of the operation of the machine, industrial process or other reasons in the structure. The acoustic emissions are commonly generated as a result of frictional processes and impacts. The transducer 12 is arranged to detect the acoustic emissions generated by or in the machine, industrial process or structure and to produce an output signal dependent upon the acoustic emission activity detected. The transducer 12 is commonly a piezoceramic element, although other suitable types of transducer may be used, more than one transducer may be used.

The output signal produced by the transducer 12 is supplied to an amplifier 14. The amplifier 14 amplifies the output signal and may incorporate filters to select the required frequency band or frequency bands. The amplified output signal is rectified by a rectifier 15 and then supplied to a signal enveloper 16 which envelopes the rectified output signal. As an example the enveloper 16 envelopes the rectified output signal with a 100 micro second time constant, although other suitable time constants may be selected which allow variations in the electrical signal to be detected, and produces a varying electrical signal.

The varying electrical signal from the enveloper 16, e.g. the enveloped rectified output signal is supplied in parallel to a mean level detector 18, and to a DC component remover 20, a rectifier 21 and a mean level detector 22 arranged in series. The mean level detector 18 measures the mean, or average, level of the electrical signal. The mean level detector 18 provides a slowly varying DC representation of the DC component of the electrical signal. For example the mean level detector 18 is an enveloper which has a 1 second time constant and this integrates the electrical signal level over the measuring time period. Other suitable time constants may be used which produce slowly varying signals. The DC component remover 20 removes the DC component from the electrical signal to leave an AC component of the electrical signal. The AC component of the electrical signal is rectified by the rectifier 21 before passing to the mean level detector 22. The mean level detector 22 measures the mean level of the fluctuations of the rectified AC component of the electrical signal. The mean level detector 22 provides a slowly varying DC representation of the AC component of the electrical signal. For example the mean level detector 22 is an enveloper which also has a 1 second time constant and this integrates the fluctuations in the rectified AC component of the electrical signal over the measuring time period. Other suitable time constants may be used which provide slowly varying signals.

The mean level of the electrical signal as detected by the mean level detector 18 and the mean level of the rectified AC component of the electrical signal as detected by the mean level detector 22 are supplied to a ratio measurer 24. The ratio measurer 24 determines the ratio of the mean level of the rectified AC component of the electrical signal to the mean level of the electrical signal. The ratio measurer 24 divides the mean level of the rectified AC component of the electrical signal by the mean level of the electrical signal and supplies the output to an output terminal 26. The ratio measurer is a processor or a microprocessor with a low sampling rate.

The output terminal 26 may be connected to a display to show the ratio, or may be connected to an alarm such that when the ratio reaches a predetermined value the alarm is operated, or may be connected to a control device such that the control device sends a feedback signal to control the operation of the machine or process, for example to adjust the amount of lubrication, or to stop the machine.

Figure 3 shows the relative acoustic emission level compared to that at 20^{o}C for various temperatures. The acoustic emission level detected by the transducer decreases with temperature due to changes in the sensitivity of the transducer with temperatures. The graph shows that a prior art device which measures the mean acoustic emission level will also suffer an apparent loss in acoustic emission level due to a decrease in sensitivity of the transducer caused by a temperature increase. The graph also shows that the ratio between the mean of the rectified AC component of the acoustic emission level and the mean acoustic emission level value remains substantially constant with temperature changes even though the transducer sensitivity changes. The ratio between the mean level of the rectified AC component of the acoustic emission level and the mean acoustic emission level also compensates for changes in transducer sensitivity due to other effects for example changes in acoustic coupling or damping characteristics of the sensor or machine.

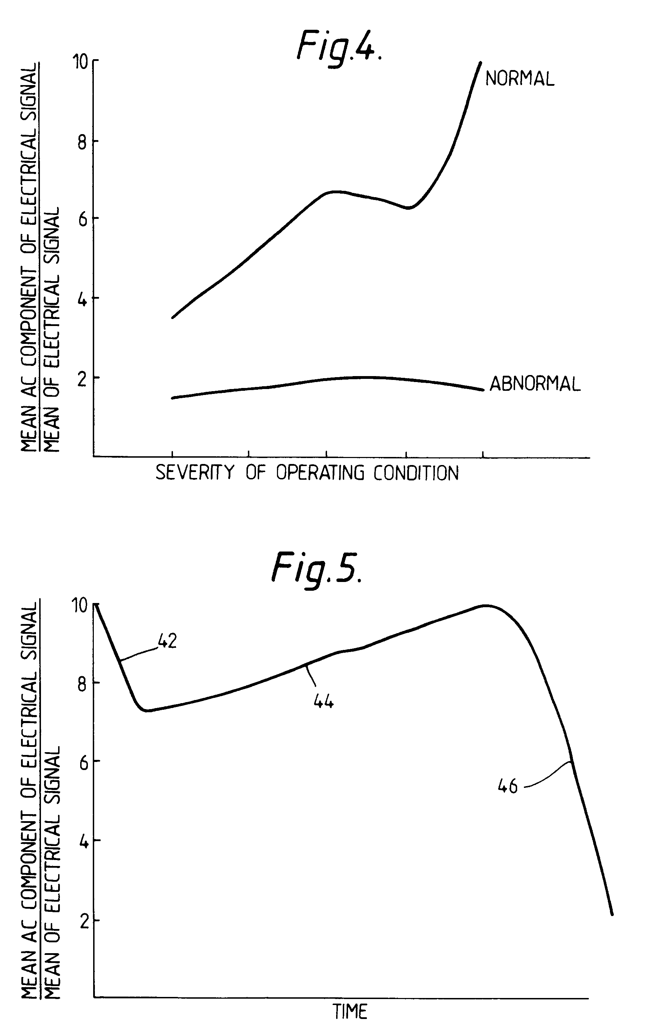

Figure 4 shows the effect on the ratio between the mean of the rectified AC component of the electrical signal level and the mean electrical signal level with varying operating conditions of a machine or industrial process for a normal and an abnormal machine or process. In this example for a normal machine or industrial process the ratio increases considerably with severity of the operating conditions, indicating an increase of distress, and we believe this to be characteristic in the early stages of degradation of the machine or process. For the abnormal condition, in the later stages of degradation of the machine or process, a lower value of the ratio is exhibited at all operating conditions, and we believe this to be a characteristic of degradation.

Figure 5 shows what we believe to be the effect on the ratio between the mean of the rectified AC component of the electrical signal level and the mean electrical signal level at a particular operating condition over time with increasing distress. The area 42 of the graph corresponds to bedding in of the machine, area 44 corresponds to progressively increasing distress of the machine during its working life and area 46 corresponds to the later stages of degradation in the approach to failure of the machine.

This method has the advantages of the second and third methods discussed in the prior art of being self compensating for variations in the overall level of the electrical signal level such as those caused by variations in the operating conditions providing it remains at a similar level of distress of the machine or industrial process, or for variations in the transducer sensitivity.

This method has the advantage of the third method of not being significantly affected by electromagnetic switching transients.

This method also has the advantage of using processors or microprocessors to measure the ratio between the mean of the rectified AC component of the electrical signal level and the mean of the electrical signal level, which require relatively slow sampling rates and are consequently much cheaper.

The use of the enveloping circuits with relatively long time constants to measure the mean of the rectified AC component of the electrical signal level and the mean electrical signal level enable a processor or microprocessor with a low sampling rate to be used.

A further apparatus 30 for processing acoustic emissions, shown in Figure 2, comprises a transducer 12 which is acoustically coupled to a source process of acoustic emissions. The transducer 12 is arranged to detect the acoustic emissions generated in a machine, industrial process or structure and to produce an output signal dependent upon the acoustic emission activity detected.

The output signal produced by the transducer 12 is supplied to an amplifier 14. The amplifier 14 amplifies the output signal and the amplified output signal is rectified by a rectifier 15 and supplied to a signal enveloper 16. The enveloper 16 envelopes the rectified output signal to produce an electrical signal which is supplied to a mean level detector 18, and to a DC component remover 20, a rectifier 21 and a mean level detector 22 arranged in series. The mean level detector 18 measures the mean level of the electrical signal. The DC component remover 20 removes the DC component from the electrical signal to leave the AC component of electrical signal, and this is rectified by the rectifier 21. The mean level detector 22 measures the mean level of the fluctuations of the rectified AC component of the electrical signal.

The mean level of the electrical signal is supplied to a logarithmic amplifier 32 which produces an output signal which is the log of the mean level of the electrical signal. The mean level of the rectified AC component of the electrical signal is supplied to a logarithmic amplifier 34 which produces an output signal which is the log of the mean level of the rectified AC component of the electrical signal.

The output signals from the two logarithmic amplifiers 32 and 34 are supplied to a ratio measurer 36 which measures the ratio between the mean level of the rectified AC component of the electrical signal and the mean level of the electrical signal. The ratio measurer 36 is a subtracting amplifier and subtracts the output of one logarithmic amplifier from the other logarithmic amplifier, and produces an output proportional to the log of the ratio.

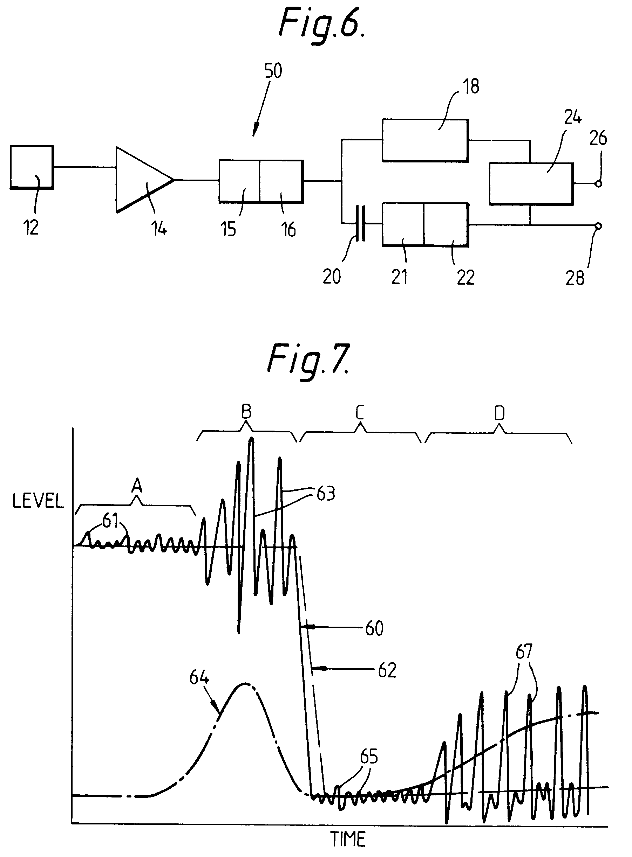

A further apparatus 50 for processing acoustic emissions, shown in figure 6, comprises a transducer 12 which is acoustically coupled to a source process of acoustic emissions. The transducer 12 is arranged to detect the acoustic emissions generated in a machine, industrial process or structure and to produce an output signal dependent upon the acoustic emission activity detected.

The output signal produced by the transducer 12 is supplied to an amplifier 14. The amplifier 14 amplifies the output signal and the amplified output signal is rectified by a rectifier 15 and supplied to a signal enveloper 16. The enveloper 16 envelopes the rectified output signal to produce an electrical signal which is supplied to a mean level detector 18, and to a DC component remover 20, a rectifier 21 and a mean level detector 22 arranged in series. The mean level detector 18 measures the mean level of the electrical signal. The DC component remover removes the DC component from the electrical signal to leave the AC component of the electrical signal, and this is rectified by the rectifier 21. The mean level detector 22 measure the mean level of the fluctuations of the rectified AC component of the electrical signal.

The mean level of the electrical signal as detected by the mean level detector 18 and the mean level of the rectified AC component of the electrical signal as detected by the mean level detector 22 are supplied to a ratio measurer 24. The ratio measurer 24 determines the ratio of the mean level of the rectified AC component of the electrical signal to the mean level of the electrical signal and supplies the output to an output terminal 26. Alternatively the mean level of the rectified AC component of the electrical signal as detected by the mean level detector 22 is supplied to a second output terminal 28.

The output terminal 26 may be connected to a display to show the ratio, or may be connected to an alarm such that when the ratio reaches a predetermined value the alarm is operated, or may be connected to a control device such that the control device sends a feedback signal to control the operation of the machine or process.

The output terminal 28 may be connected to a display to show the mean level of the rectified AC component of the electrical signal, or may be connected to an alarm such that when the mean level of the rectified AC component of the electrical signal reaches a predetermined value the alarm is operated, or may be connected to a control device such that the control device sends a feedback signal to control the operation of the machine or process.

Figure 7 shows an example of the varying electrical signal 60 produced by the enveloper 16, the corresponding mean level of the electrical signal 62 measured by the detector 18 and the corresponding mean level of the rectified AC component of the electrical signal 64 as measured by the detector 22. In region A the electrical signal 60 is at a relatively high level and is substantially constant i.e. the fluctuations 61 in the level are relatively small. The mean level of the electrical signal 62 is also relatively high, but the mean level of the rectified AC component of the electrical signal 64 is relatively low because the electrical signal 60 is substantially constant and has small fluctuations 61. In region B the electrical signal 60 is again at a relatively high level and is not constant i.e. the fluctuations 63 in the level are relatively high. The mean level of the electrical signal 62 is again relatively high and is unaffected by the fluctuations 63, but the mean level of the rectified AC component of the electrical signal 64 increases as the size and number of fluctuations 63 increases. In region C the electrical signal 60 is at a relatively low level and is substantially constant i.e. the fluctuations 65 in the level are relatively small. The mean level of the electrical signal 62 is also relatively low, and the mean level of the rectified AC component of the electrical signal 64 is relatively low because the electrical signal 60 is substantially constant and has small fluctuations 65. In region D the electrical signal 60 is at a relatively low level and is not constant i.e. the fluctuations 67 in the level are relatively high. The mean level of the electrical signal 62 is also relatively low, but the mean level of the AC component of the electrical signal 64 increases as the size and number of fluctuations 67 increases.

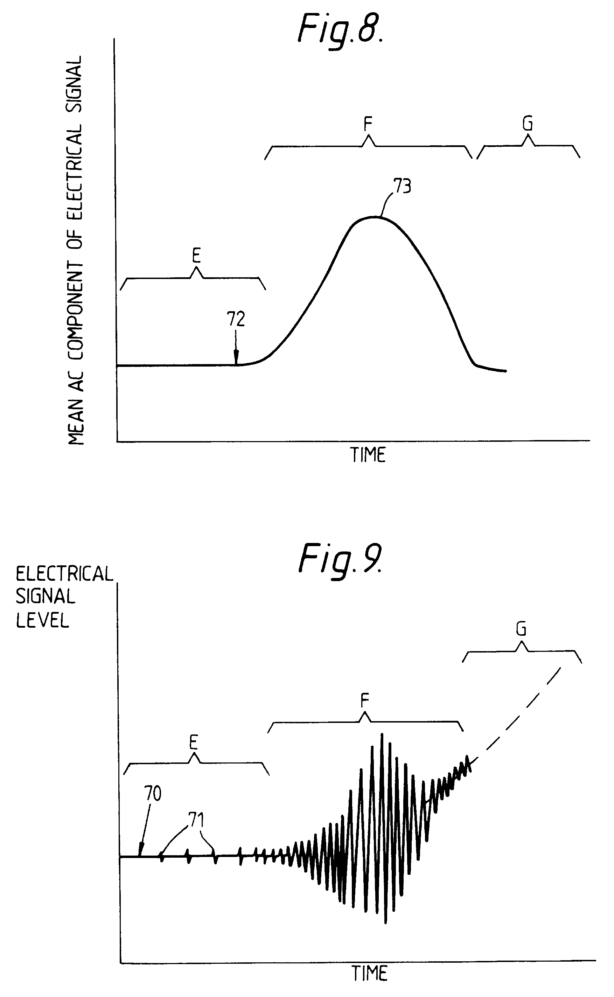

Figures 8 and 9 show what we believe to be the affect on the mean level of the rectified AC component of the electrical signal at a particular operating condition with time with increasing distress. The electrical signal level 70 in figure 9 remains substantially uniform for a period of time in region E, and during this period the size and number of fluctuations 71 in the level of the electrical signal 70 are relatively low. Over the same time period E, as shown in figure 8, the mean level of the rectified AC component of the electrical signal 72 remains substantially uniform and relatively low. Region E corresponds to normal operation of a machine or process. The regions F and G of figures 8 and 9 correspond to progressively increasing distress of the machine or process during its working life. In region F the electrical signal level 70 has increasing numbers of fluctuations 71 and the size of the fluctuations 71 increases to a maximum and then decreases. The fluctuations increase in size to a maximum and then decrease because the fluctuations produce a gradual increase in the constant/mean electrical signal level which effectively reduces the size of the fluctuations 71 from the constant/mean electrical signal level. In region F the mean level of the rectified AC component of the electrical signal 72 increases to a peak 73, corresponding to the maximum size of the fluctuations 71 in the electrical signal 70, and then decreases. It can be seen that the mean level of the rectified alternating current component of the electrical signal gives an early indication of increasing distress of the machine, or process, to enable the earliest possible detection of faults in the machine or process. The mean level of the rectified alternating current component of the electrical signal responds to the individual bursts of acoustic emission activity which are associated with the first signs of wear or damage.

Although the description has referred to measuring the mean level of the alternating current component of the electrical signal any suitable measure of the alternating current component of the electrical signal may be used.

The measuring of the ratio between the mean level of the rectified AC component of the electrical signal and the mean level of the electrical signal may be by dividing the mean level of the rectified AC component of the electrical signal by the mean level of the electrical signal or by dividing the mean level of the electrical signal by the mean level of the rectified AC component of the electrical signal. It is also possible to use other powers of the mean level of the AC component of the electrical signal divided by the mean level of the electrical signal, for example squared.

The description has referred to the electrical signal being rectified before enveloping, the electrical signal may be half wave rectified, or full wave rectified for the measuring of the ratio.

The electrical signal may correspond to the acoustic emission level, the acoustic emission level squared, or some other power of the acoustic emission level, the acoustic emission intensity a power of the acoustic emission intensity or the RMS level.

If a DC coupled transducer is used the electrical signal may be used under certain circumstances without rectification.

## Claims

1. A method of processing an output signal from a transducer (12), the output signal from the transducer (12) corresponding to an acoustic emission activity generated by a process, comprising enveloping (16) the transducer (12) output signal to produce an electrical signal, characterised by removing (20) a direct current component from the electrical signal, measuring (22) an alternating current component of the electrical signal for variations which are indicative of variations in the process producing the acoustic emissions.

2. A method as claimed in claim 1 comprising measuring a mean value of the electrical signal, determining a ratio between the measure of the alternating current component of the electrical signal and the mean value of the electrical signal raised to a power, and monitoring the power of said ratio for variations which are indicative of variations in the process producing the acoustic emissions.

3. A method as claimed in claim 1 or claim 2 comprising measuring the mean value of the alternating current component of the electrical signal.

4. A method as claimed in claim 2 in which the ratio is the mean value of the the electrical signal divided by the mean value of the alternating current component of the electrical signal.

5. A method as claimed in claim 5 in which the electrical signal corresponds to the level of the acoustic emission activity.

6. A method as claimed in claim 2 in which the ratio is the mean value of the alternating current component of the electrical signal divided by the mean value of the electrical signal.

7. An apparatus for processing acoustic emissions in order to recognise features indicative of variations in a process producing the acoustic emissions comprising at least one transducer (12) acoustically coupled to the process producing acoustic emissions, the at least one transducer (12) being arranged to detect the acoustic emissions and to produce an output signal dependent upon the acoustic emission activity, means (16) to envelope the transducer (12) output signal to produce an electrical signal characterised by means (20) to remove a direct current component from the electrical signal and means (22) to measure an alternating current component of the electrical signal variations of which are indicative of variations in the process producing the acoustic emissions.

8. An apparatus as claimed in claim 7 comprising means (18) to measure a mean value of the electrical signal, means (24) to determine a power of the ratio between the measure of the alternating current component of the electrical signal and the mean value of the electrical signal, means to monitor the power of said ratio for variations which are indicative of variations in the process producing the varying electrical signal.

9. An apparatus as claimed in claim 7 or claim 8 in which the means (22) to measure the alternating current component of the electrical signal measures the mean value of the alternating current component of the electrical signal.

10. An apparatus as claimed in claim 8 in which divider means (24) determine the ratio of the mean value of the alternating current component of the electrical signal divided by the mean value of the electrical signal.

11. An apparatus as claimed in claim 8 in which a first logarithmic amplifier means (32) produces the log of the mean value of the electrical signal, a second logarithmic amplifier means (34) produces the log of the mean value of the alternating current component of the electrical signal, subtracter means (36) subtracts the log of the mean value of the electrical signal from the log of the mean value of the alternating current component of the electrical signal to determine the log of the ratio of the mean value of the alternating current component of the electrical signal to the mean value of the electrical signal.

12. An apparatus as claimed in claim 7 in which the electrical signal corresponds to the level of the acoustic emission activity.

13. An apparatus as claimed in claim 8 in which the means (24) to determine the ratio is arranged to operate an alarm when the ratio is equal to, greater than or less than a predetermined value.

14. An apparatus as claimed in any of claims 9 to 13 in which the means (22) to measure the mean value of the alternating current component of the electrical signal comprises an alternating current coupled enveloper (22) with a relatively long time constant, and a rectifier (21).

15. An apparatus as claimed in claim 8 in which the means (18) to measure the mean value of the electrical signal comprises an enveloper (18) with a relatively long time constant.

16. An apparatus as claimed in claim 14 or claim 15 in which the enveloper (18) has a 1 second time constant.

17. An apparatus as claimed in claim 7 in which a rectifier (15) rectifies the transducer output signal before it is supplied to the enveloper (16), and the enveloper (16) has a relatively short time constant.

18. An apparatus as claimed in claim 7 in which the enveloper (16) has a 100 microsecond time constant.

19. An apparatus as claimed in any of claims 7 to 19 in which the process is an industrial process or a machine.

20. An apparatus as claimed in claim 19 in which the means (24) to determine the ratio is arranged to send a feedback signal to control the machine or industrial process.

## Patentansprüche

1. Verfahren zur Verarbeitung eines Ausgangssignals eines Wandlers (12), das einer akustischen Emissionsaktivität entspricht, die von einem Verfahren erzeugt wurde, wobei in einer Hüllstufe (16) das Ausgangssignal des Wandlers (12) umhüllt wird, um ein elektrisches Signal zu erzeugen,
dadurch gekennzeichnet, daß eine Gleichstromkomponente aus dem elektrischen Signal gelöscht wird (20), daß eine Wechselstromkomponente des elektrischen Signals im Hinblick auf Änderungen gemessen wird (22), die Änderungen in den akustischen Emissionen kenntlich machen, die durch das Arbeitsverfahren erzeugt wurden.

2. Verfahren nach Anspruch 1, bei welchem ein Mittelwert des elektrischen Signals gemessen und ein Verhältnis zwischen der Messung der Wechselstromkomponente des elektrischen Signals und dem Mittelwert des elektrischen Signals, das auf einen Wert angestiegen ist, bestimmt wird, und bei dem der Wert des Verhältnisses auf Veränderungen überwacht wird, die Veränderungen in dem Arbeitsprozeß anzeigen, der die akustischen Emissionen erzeugt.

3. Verfahren nach den Ansprüchen 1 oder 2, bei welchem der Mittelwert der Wechselstromkomponente des elektrischen Signals gemessen wird.

4. Verfahren nach Anspruch 2, bei welchem das Verhältnis der Mittelwert des elektrischen Signals, dividiert durch den Mittelwert der Wechselstromkomponente des elektrischen Signals ist.

5. Verfahren nach Anspruch 4, bei welchem das elektrische Signal dem Pegel der akustischen Emissionsaktivität entspricht.

6. Verfahren nach Anspruch 2, bei welchem das Verhältnis der Mittelwert der Wechselstromkomponente des elektrischen Signals, dividiert durch den Mittelwert des elektrischen Signals ist.

7. Vorrichtung zur Verarbeitung akustischer Emissionen zur Feststellung von Merkmalen, die Veränderungen in einem Prozeß anzeigen, der die akustischen Emissionen erzeugt, wobei wenigstens ein Wandler (12) akustisch mit den durch den Prozeß erzeugten akustischen Emissionen gekoppelt ist und der wenigstens eine Wandler (12) die akustischen Emissionen detektiert und ein Ausgangssignal erzeugt, welches abhängig ist von der akustischen Emissionsaktivität, und wobei eine Hüllstufe (16) das vom Wandler (12) gelieferte Ausgangssignal umhüllt, um ein elektrisches Signal zu erzeugen,
gekennzeichnet durch Mittel (20), die eine Gleichstromkomponente im elektrischen Signal löschen, und durch Mittel (22), die eine Wechselstromkomponente des elektrischen Signals messen, deren Änderungen Veränderungen in den akustischen Emissionen anzeigen, die in dem Prozeß auftreten, der die akustischen Emissionen erzeugt.

8. Vorrichtung nach Anspruch 7, welche Mittel (18) aufweist, um den Mittelwert des elektrischen Signals zu bestimmen, wobei außerdem Mittel (24) vorgesehen sind, um einen Wert des Verhältnisses zwischen der Messung der Wechselstromkomponente des elektrischen Signals und dem Mittelwert des elektrischen Signals zu bestimmen, wobei der Wert des Verhältnisses im Hinblick auf Veränderungen überwacht wird, die Änderungen des Prozesses kennzeichnen, der das sich verändernde elektrische Signal erzeugt.

9. Vorrichtung nach Anspruch 7 oder Anspruch 8, bei der die Mittel (22) zur Messung der Wechselstromkomponente des elektrischen Signals den Mittelwert der Wechselstromkomponente des elektrischen Signals messen.

10. Vorrichtung nach Anspruch 8, bei welcher die Dividierstufe (24) das Verhältnis vom Mittelwert der Wechselstromkomponente des elektrischen Signals zum Mittelwert des elektrischen Signals bestimmt.

11. Vorrichtung nach Anspruch 8, bei welcher ein erster logarithmischer Verstärker (32) den Logarithmus des Mittelwertes des elektrischen Signals erzeugt und ein zweiter logarithmischer Verstärker (34) den Logarithmus des Mittelwertes der Wechselstromkomponente des elektrischen Signals erzeugt, wobei eine Subtrahierstufe (36) den Logarithmus des Mittelwertes des elektrischen Signals vom Logarithmus des Mittelwertes der Wechselstromkomponente des elektrischen Signals abzieht, um den Logarithmus des Verhältnisses vom Mittelwert der Wechselstromkomponente des elektrischen Signals zum Mittelwert des elektrischen Signals zu bestimmen.

12. Vorrichtung nach Anspruch 7, bei welcher das elektrische Signal dem Pegel der akustischen Emissionsaktivität entspricht.

13. Vorrichtung nach Anspruch 8, bei welcher die Mittel (24) zur Bestimmung des Verhältnisses einen Alarm auslösen, wenn das Verhältnis gleich oder größer einem vorbestimmten Wert ist.

14. Vorrichtung nach einem der Ansprüche 9 bis 14, bei welcher die Mittel (22) zur Bestimmung des Mittelwertes der Wechselstromkomponenten des elektrischen Signals eine wechselstromseitig gekoppelte Hüllstufe (22) mit einer relativ großen Zeitkonstante und einen Gleichrichter (21) aufweisen.

15. Vorrichtung nach Anspruch 8, bei welcher die Mittel (18) zur Messung des Mittelwertes des elektrischen Signals eine Hüllstufe (18) mit einer relativ großen Zeitkonstante aufweisen.

16. Vorrichtung nach Anspruch 14 oder Anspruch 15, bei der die Hüllstufe (18) eine Zeitkonstante von 1 Sekunde besitzt.

17. Vorrichtung nach Anspruch 7, bei der ein Gleichrichter (15) das Wandlerausgangssignal gleichrichtet, bevor es der Hüllstufe (16) zugeführt wird, und die Hüllstufe (16) eine relativ kurze Zeitkonstante besitzt.

18. Vorrichtung nach Anspruch 7, bei der die Hüllstufe (16) eine Zeitkonstante von 100 Mikrosekunden besitzt.

19. Vorrichtung nach einem der Ansprüche 7 bis 18, bei der das Verfahren ein industrieller Prozeß oder eine Maschine ist.

20. Vorrichtung nach Anspruch 19, bei der die Mittel (24) zur Bestimmung des Verhältnisses ein Rückkopplungssignal aussenden, um die Maschine oder den industriellen Prozeß zu steuern.

## Revendications

1. Méthode de traitement d'un signal de sortie d'un transducteur (12), le signal de sortie du transducteur (12) correspondant à une activité d'émission acoustique générée par un procédé, comprenant l'enveloppement (16) du signal de sortie du transducteur (12) pour produire un signal électrique, caractérisée par la suppression (20) d'une composante continue du courant du signal électrique, par la mesure (22) d'une composante alternative du courant du signal électrique pour des variations qui montrent des variations dans le procédé produisant les émissions acoustiques.

2. Méthode selon la revendication 1 comprenant la mesure d'une valeur moyenne du signal électrique, la détermination d'un rapport entre la mesure de la composante alternative du courant du signal électrique et la valeur moyenne du signal électrique élevé à une puissance, et le contrôle de la puissance dudit rapport pour des variations qui montrent des variations dans le procédé produisant les émissions acoustiques.

3. Méthode selon la revendication 1 ou lit revendication 2 comprenant la mesure de la valeur moyenne de la composante alternative du courant du signal électrique.

4. Méthode selon la revendication 2 dans laquelle le rapport est la valeur moyenne du signal électrique divisée par la valeur moyenne de la composante alternative du courant du signal électrique.

5. Méthode selon la revendication 5 dans laquelle le signal électrique correspond au niveau de l'activité d'émission acoustique.

6. Méthode selon la revendication 2 dans laquelle le rapport est la valeur moyenne de la composante alternative du courant du signal électrique divisée par la valeur moyenne du signal électrique.

7. Dispositif de traitement des émissions acoustiques afin d'identifier les caractéristiques montrant les variations dans un procédé produisant des émissions acoustiques comprenant au moins un transducteur (12) couplé acoustiquement au procédé produisant des émissions acoustiques, ledit au moins un transducteur (12), étant réglé pour détecter les émissions acoustiques et pour produire un signal de sortie dépendant de l'activité d'émission acoustique, des moyens (16) pour envelopper le signal de sortie du transducteur (12) pour produire un signal électrique caractérisé par des moyens (20) pour supprimer une composante continue du courant du signal électrique et des moyens (22) pour mesurer une composante alternative du courant du signal électrique dont les variations montrent les variations dans le procédé produisant les émissions acoustiques.

8. Dispositif selon la revendication 7 comprenant des moyens (18) pour mesurer une valeur moyenne du signal électrique, des moyens (24) pour déterminer une puissance du rapport entre la mesure de la composante alternative du courant du signal électrique et la valeur moyenne du signal électrique, des moyens pour contrôler la puissance dudit rapport pour des variations qui montrent les variations dans le procédé produisant le signal électrique variable.

9. Dispositif selon la revendication 7 ou la revendication 8 dans lequel les moyens (22) pour mesurer la composante alternative du courant du signal électrique mesurent la valeur moyenne de la composante alternative du courant du signal électrique.

10. Dispositif selon la revendication 8 dans lequel des moyens de division (24) déterminent le rapport de la valeur moyenne de la composante alternative du courant du signal électrique sur la valeur moyenne du signal électrique.

11. Dispositif selon la revendication 8 dans lequel des premiers moyens d'amplification logarithmique (32) produisent le logarithme de la valeur moyenne du signal électrique, des seconds moyens d'amplification logarithmique (34) produisent le logarithme de la valeur moyenne de la composante alternative du courant du signal électrique, des moyens de soustraction (36) soustraient le logarithme de la valeur moyenne du signal électrique du logarithme de la valeur moyenne de la composante alternative dit courant dit signal électrique pour déterminer le logarithme du rapport de la valeur moyenne de la composante alternative du courant du signal électrique sur la valeur moyenne du signal électrique.

12. Dispositif selon la revendication 7 dans lequel le signal électrique correspond au niveau de l'activité d'émission acoustique.

13. Dispositif selon la revendication 8 dans lequel les moyens (24) pour déterminer le rapports sont réglés pour mettre en route une alarme lorsque le rapport est égal à, plus grand que ou plus petit qu'une valeur prédéterminée.

14. Dispositif selon l'une quelconque des revendications 9 à 13 dans lequel les moyens (22) pour mesurer la valeur moyenne de la composante alternative du courant du signal électrique comprennent un enveloppeur couplé de courant alternatif (22) avec une constante de temps relativement longue, et un redresseur (21).

15. Dispositif selon la revendication 8 dans lequel les moyens (18) pour mesurer la valeur moyenne du signal électrique comprennent un enveloppeur (18) avec une constante de temps relativement longue.

16. Dispositif selon la revendication 14 ou la revendication 15 dans lequel l'enveloppeur (18) a une constante de temps d'1 seconde.

17. Dispositif selon la revendication 7 dans lequel un redresseur (15) redresse le signal de sortie du transducteur avant qu'il ne soit amené à l'enveloppeur (16), et dans lequel l'enveloppeur (16) a une constante de temps relativement courte.

18. Dispositif selon la revendication 7 dans lequel l'enveloppeur (16) a une constante de temps de 100 microsecondes.

19. Dispositif selon l'une quelconque des revendications 7 à 19 dans lequel le procédé est un procédé industriel ou une machine.

20. Dispositif selon la revendication 19 dans lequel les moyens (24) pour déterminer le rapport sont réglés pour envoyer un signal de rétroaction pour contrôler la machine ou le procédé industriel.
